# EUROPÄISCHE PATENTSCHRIFT

(11) **EP 2 379 909 B1**
(45) Veröffentlichungstag und Bekanntmachung des Hinweises auf die Patenterteilung: **08.08.2018**
(21) Anmeldenummer: 09810770.9
(22) Anmeldetag: 23.12.2009
(51) Int. Cl.: F16F 15/16

(54) **TORSIONSSCHWINGUNGSDÄMPFER MIT EINER PRIMÄRSEITE UND VERFAHREN ZUM HERSTELLEN EINER PRIMÄRMASSE EINES TORSIONSSCHWINGUNGSDÄMPFERS**
TORSIONAL VIBRATION DAMPER HAVING A PRIMARY SIDE, AND METHOD FOR PRODUCING A PRIMARY MASS OF A TORSIONAL VIBRATION DAMPER
AMORTISSEUR DE VIBRATIONS DE TORSION COMPRENANT UN CÔTÉ PRIMAIRE ET PROCÉDÉ POUR PRODUIRE UNE MASSE PRIMAIRE D'UN AMORTISSEUR DE VIBRATIONS DE TORSION

(30) Priorität: 23.12.2008 DE 102008063015
(43) Veröffentlichungstag der Anmeldung: 26.10.2011
(73) Patentinhaber: Gat Gesellschaft Für Antriebstechnik MbH, 52477 Alsdorf (DE)
(72) Erfinder: KRANZ, Andreas, 52223 Stolberg (DE); HEIDINGSFELD, Dietmar, 52078 Aachen (DE)
(74) Vertreter: Reuther, Martin
(86) Internationale Anmeldenummer: PCT/DE2009/001803
(87) Internationale Veröffentlichungsnummer: WO 2010/072213

(56) Entgegenhaltungen:
- EP-A1- 1 442 818
- EP-A1- 1 698 798
- EP-A2- 0 325 724
- EP-A2- 1 652 613
- DE-A1- 3 901 571
- DE-A1- 19 522 718
- GB-A- 2 258 713
- US-A- 5 601 492
- US-A- 6 056 099
- US-A1- 2003 234 280
- US-B1- 6 179 714

## Beschreibung

Die Erfindung betrifft einen Torsionsschwingungsdämpfer mit einer Primärseite, mit einer Sekundärseite und mit einer Feder-Dämpfer-Einrichtung, bei welchem die Primärseite eine Primärmasse mit einer Antriebswellenaufnahme und die Sekundärseite eine Sekundärmasse umfasst und bei welchem die Feder-Dämpfer-Einrichtung zwischen der Primärmasse und der Sekundärmasse Torsionsschwingungen dämpfen kann bzw. dämpft. Zudem betrifft die Erfindung ein Verfahren zum Herstellen einer Primärmasse eines Torsionsschwingungsdämpfers, bei welchem die Primärmasse gegossen wird.

Gattungsgemäße Torsionsschwingungsdämpfer sind aus dem Stand der Technik bereits gut bekannt und haben sich vielfach bewährt. Beispielsweise offenbart die Europäische Patentschrift EP 0 926 388 B1 einen derartigen Torsionsschwingungsdämpfer mit einer ersten Baugruppe als Primärseite und mit einer zweiten Baugruppe als Sekundärseite, die über eine Federanordnung wirkverbunden sind. Die Federanordnung besteht aus umfangsverteilten tangential wirksamen Federn, welche an ihren Enden jeweils in bekannter Weise Schubkolben zueinander distanziert halten. Die Primärseite umfasst hierbei eine Primärmasse, welche im Wesentlichen aus einem radial äußeren Graugussring besteht, welcher radial weiter innen von einer zentral gelagerten Blechscheibe getragen wird. Die Blechscheibe hat radial innen eine Antriebswellenaufnahme mit Befestigungsschraubenlöscher, sodass die gesamte Primärmasse mittels geeigneter Befestigungsschrauben an einer Antriebswelle angeschraubt werden kann. Die Sekundärseite hingegen besteht im Wesentlichen lediglich aus einem Graugusskörper, der über ein Lager gegenüber der Primärmasse drehbeweglich angeordnet ist. Die Federanordnung ist in einer Federkammer angeordnet, welche zum einen von der Blechscheibe und zum anderen von einem polygonal ausgebildeten Kontaktring begrenzt ist, sodass die Federn gut geführt im Inneren des Torsionsschwingungsdämpfers angeordnet sind.

Einen ähnlich aufgebauter Torsionsschwingungsdämpfer offenbart die europäische Patentschrift EP 0 926 389 B1, wobei die dortige Primärmasse ebenfalls aus einem radial äußeren Graugussring, der von einer radial weiter innen angeordneten Blechscheibe getragen wird, gebildet ist. Auch hierbei bildet ein Kontaktring, der eine polygonale Form aufweist, eine innere Umfangsfläche einer Federkammer, in welcher Federn einer Federanordnung, welche zwischen der ersten Baugruppe und der zweiten Baugruppe wirken kann, gelagert sind.

Den beiden genannten Torsionsschwingungsdämpfern ist gemein, dass ihre jeweiligen Primärmassen im Wesentlichen lediglich von einem Masse beistellenden Graugussring, der konstruktiv aufwändig zudem an einer Blechscheibe befestigt ist, gebildet sind. Zumindest hierdurch gestaltet sich die jeweilige Primärseite baulich aufwändig, da beispielsweise eine solche Blechscheibe zusätzlich meistens noch gehärtet werden muss.

Darüber hinaus ist in der Offenlegungsschrift DE 10 2004 036 939 A1 ein Torsionsschwingungsdämpfer beschrieben, bei welchem die Primärmasse ähnlich aus einem radial weiter außen vorgesehenen Gussring und einer radial weiter innen liegenden Stahlscheibe besteht. Hierbei bildet der Gussring selbst zumindest teilweise eine Wandung einer Federkammer, in welcher eine Feder-Dämpfer-Einrichtung platziert ist.

Um jedoch an der Primärseite eines Torsionsschwingungsdämpfers eine größere und schwerere Primärmasse bilden zu können, existieren neben den vorstehend beschriebenen Primärseiten, bei welchen eine Primärmasse im Wesentlichen aus einem Gussring und einer Stahlscheibe bestehen, andere Torsionsschwingungsdämpfer, deren Primärseite eine Primärmasse aus einem Gussmaterial aufweisen, welches bis an eine Antriebswelle, wie etwa eine Kurbelwelle einer Brennkraftmaschine, heranreicht und dort mittels geeigneter Befestigungsschrauben an der Antriebswelle unmittelbar angeflanscht sind. Derart aufgebaute Torsionsschwingungsdämpfer haben primärseitig bei vergleichbarem Bauraum somit eine weitaus größere schwingungsdämpfende Masse zur Verfügung, sodass ihnen allein hierdurch bereits ausgezeichnete Dämpfungseigenschaften innewohnen. Ein solcher Torsionsschwingungsdämpfer ist beispielsweise in der Patentschrift DE 34 48 595 C2 beschrieben. Aus der US 6,179,714 B1 ist ein Torsionsschwingungsdämpfer bekannt, dessen Primärseite als Gussteil ausgeführt ist.

Es ist Aufgabe vorliegender Erfindung, gattungsgemäße Torsionsschwingungsdämpfer weiterzuentwickeln.

Die Aufgabe der Erfindung wird von einem Torsionsschwingungsdämpfer mit einer Primärseite, mit einer Sekundärseite, mit einer mit Schmiermittel benetzten Feder-Dämpfer-Einrichtung gelöst, bei welchem die Primärseite eine Primärmasse mit einer Antriebswellenaufnahme und die Sekundärseite eine Sekundärmasse umfasst und bei welchem die Feder-Dämpfer-Einrichtung zwischen der Primärmasse und der Sekundärmasse Torsionsschwingungen dämpft, wobei sich der Torsionsschwingungsdämpfer insbesondere dadurch auszeichnet, dass die Primärmasse mit der Antriebswellenaufnahme urgeformt hergestellt ist und dass an der Primärmasse (4) eine Dichtungseinrichtung (62) angeordnet ist, welche radial nach innen zwischen der Primärmasse (4) und der Sekundärmasse (30) hinein ragt und an der Primärmasse (4) stoffschlüssig angeordnet ist.

Ist die die Antriebswellenaufnahme umfassende Primärmasse urgeformt hergestellt, kann der Torsionsschwingungsdämpfer konstruktiv einfach einerseits mit einer besonders großen primärseitigen Primärmasse und andererseits mit noch weiter verbesserten Dämpfungseigenschaften bereitgestellt werden, da speziell die Feder-Dämpfer-Einrichtung zusätzlich noch nass gelagert bzw. zusätzlich noch geschmiert ist. Insbesondere kann die Primärmasse als einstückiges Graugussteil hergestellt sein, wobei vorteilhafter Weise auf eine zusätzliche Stahlscheibe als Trägerbauteil für das Graugussteil verzichtet werden kann. Zudem kann ein aufwändiger Härtevorgang einer ansonsten verwendeten Stahlscheibe entfallen.

Der Begriff "urgeformt" beschreibt hierbei, dass die Primärmasse vorzugsweise aus einem Graugussmaterial gegossen ist. Es versteht sich, dass aber auch andere Gussmaterialien und zudem verschiedene Gusstechniken zur Anwendung kommen können, um speziell die Primärmasse des Torsionsschwingungsdämpfers mit wenig Aufwand herstellen zu können.

In Abweichung vom gattungsgemäßen Stand der Technik kombiniert vorliegende Erfindung somit die Vorteile einer urgeformten Primärmasse, die an gegebene Bauraumverhältnisse unmittelbar und ohne komplexen Mehraufwand angepasst werden kann, mit einer mit Schmiermittel wechselwirkenden Feder-Dämpfer-Einrichtung, die an sich hervorragende Dämpfungseigenschaften aufweist. Durch den unmittelbaren Kontakt der Primärmasse mit dem Schmiermittel der Feder-Dämpfer-Einrichtung kann einerseits auf zwischengeordnete Baugruppen, die einen erheblichen Mehraufwand bedeuten, verzichtet werden, was unter Umständen insbesondere eine Anordnung der Feder-Dämpfer-Einrichtung radial sehr weit draus ermöglichen kann, wodurch diese in ihrer Effizienz erhöht ist. Auch kann auf weitere Baugruppen mit einer Antriebswellenaufnahme verzichtet werden, was entsprechend weniger Aufwand bedeutet. Andererseits ist gewährleistet der unmittelbare Kontakt der Primärmasse zu dem Schmiermittel, dass die urgeformte Primärmasse eine Wandung einer Schmiermittelkammer, in welcher die gesamte Feder-Dämpfer-Einrichtung oder auch nur Baugruppen hiervon zu finden sind, bildet, so dass diesbezüglich ein funktionaler Kontakt besteht, der - unter entsprechenden Umständen - wie nachfolgend noch erläutert wird, genutzt werden kann.

Speziell bei Torsionsschwingungsdämpfer mit einem Schmiermittelsumpf besteht nahezu immer die Gefahr, dass auf Grund von Fliehkräften Schmiermittel radial nach außen geschleudert wird und hierbei ungewollt außerhalb des Torsionsschwingungsdämpfers gelangt. Ist jedoch an der Primärmasse eine Dichtungseinrichtung angeordnet, welche radial nach innen zwischen der Primärmasse und der Sekundärmasse hinein ragt, kann die Gefahr verringert werden, dass Schmiermittel unbeabsichtigt radial nach außen gelangt.

Dadurch , dass die Dichtungseinrichtung an der Primärmasse stoffschlüssig angeordnet ist, kann betriebssicher und einfach die Dichtung an der Primärmasse angebracht werden. Dieses gilt insbesondere bei einer urgeformten Primärmasse, entgegen der bisher herrschenden Meinung auf diesem Fachgebiet.

Ist die Dichtungseinrichtung an der Primärmasse zum Beispiel angeschweißt, kann eine Abdichtung zwischen der Primärmasse und der Dichtungseinrichtung mittels einer Schweißnaht erfolgen. Geeignete Schweißverfahren zum Anschweißen der Dichtungseinrichtung an der Primärmasse sind beispielsweise das WIG-Schweißen oder das Plasmaschweißen.

Alternativ kann vorteilhafter Weise vorgesehen sein, dass die Dichtungseinrichtung an der Primärmasse angelötet ist. Beispielsweise geschieht dies mittels eines WIG-Lötens oder eines Plasmalötens.

Als Zusatzwerkstoff, insbesondere als Lot, aber auch beim Schweißen beispielsweise als Schweißdraht, kann Eisen, Kupfer, Nickel und/oder Silber zur Anwendung kommen. Obgleich derartige Werkstoffe sehr kostenintensiv sind, zeigen sie derartig gute Fügeergebnisse, insbesondere im Zusammenspiel mit urgeformten Primärmassen, vorzugsweise aus Grauguss, dass insgesamt eine preisgünstige aber betriebssichere Befestigung gewährleistet werden kann.

Es versteht sich, dass die Dichtungseinrichtung auch auf anderer Weise an der Primärmasse befestigt werden kann, beispielweise eignen sich hierfür auch unterschiedliche Klebeverfahren.

Insbesondere kann die Dichtungseinrichtung auch formschlüssig an der Primärmasse angeordnet sein. Dieses kann beispielsweise durch eine Clipsverbindung realisiert werden. Auch kann die Befestigung über einen angebogenen Bereich erfolgen, wodurch insbesondere eine sehr einfach bereitzustellende und stabile Verbindung realisiert werden kann. Ein entsprechendes Anbiegen kann beispielsweise durch Krimpvorgänge, insbesondere auch durch einen um- bzw. angerollten Bereich realisiert werden. Dieses ermöglicht insbesondere einen Verzicht auf aufwändige Schweiß- oder Lötapparaturen, wobei jedoch - ggf. - eine zusätzliche Dichteinrichtung vorteilhaft sein kann, um betriebssicher eine dauerhaft dichte, insbesondere fett- bzw. schmiermitteldichte, Verbindung zu gewährleisten.

Eine alternative Ausführungsvariante sieht vor, dass die Dichtungseinrichtung partiell an der Primärmasse befestigt ist, wobei die Dichtungseinrichtung und die Primärmasse mittels einer zusätzlichen Dichtung zueinander abgedichtet sind. Insbesondere im Zusammenspiel mit einer Schweiß- oder Lötverbindung kann auf diese Weise der Energieeintrag bei Verbinden der beiden Baugruppen minimiert werden, da lediglich für die Schweiß- oder Lötpunkte ein entsprechender Energieeintrag erfolgen muss. Auf diese Weise kann die thermische Gesamtbelastung bei der Montage minimiert werden. Eine derartige Dichtung kann jedoch auch ergänzend bei einer durchgehenden stoffschlüssigen Verbindung vorgesehen sein und die eigentliche Dichtfunktion übernehmen, insbesondere um etwaige Kriechphänomene ausschließen zu können.

Die hier erläuterte Dichtungseinrichtung ist besonders dann vorteilhaft, wenn sich der Torsionsschwingungsdämpfer durch einen Schmiermittelaufnahmebereich bzw. einen Schmiermittelsumpf auszeichnet, bei welchem eine Begrenzung des Schmiermittelaufnahmebereiches zumindest teilweise von einer Gusswandung der Primärmasse gebildet ist. Beispielsweise wird der Schmiermittelaufnahmebereich von einer Federkammer für die Feder-Dämpfer-Einrichtung bereitgestellt, wobei die Federkammer Fett beinhaltet, welches an einem radialen Auswandern im Bereich zwischen der Primärmasse und der Sekundärmasse des Torsionsschwingungsdämpfers gehindert werden soll.

Die Dichtungseinrichtung kann zusätzlich besonders vorteilhaft an dem Torsionsschwingungsdämpfer verbaut werden, wenn die Dichtungseinrichtung zumindest teilweise eine Wandung einer Federkammer für eine Feder-Dämpfer-Einrichtung bildet.

Auch unabhängig von den übrigen Merkmalen der Erfindung ist es ebenfalls vorteilhaft, wenn der Torsionsschwingungsdämpfer eine Hitzeschutzeinrichtung aufweist, welche zumindest bereichsweise zwischen der Primärseite und der Sekundärmasse angeordnet ist. Insbesondere kann die Hitzeschutzeinrichtung als Scheibe axial zwischen der Primärseite und der Sekundärseite angeordnet sein. Mittels einer derartigen Hitzeschutzeinrichtung können ein Schmiermittelsumpf oder Reibeinrichtungen des Torsionsschwingungsdämpfers vor zu großer Hitze, beispielsweise von einer Kupplungseinrichtung, geschützt werden. Hierdurch kann die Lebensdauer des vorliegenden Torsionsschwingungsdämpfers zusätzlich wesentlich erhöht werden. Hierbei ist herauszustellen, dass eine derartige Hitzeschutzeinrichtung zwar fest mit der Sekundärmasse verbunden sein kann. Vorzugsweise erfolgt diese Befestigung jedoch an nicht so sehr mit Wärme belasteten Bereichen und/oder es liegt lediglich ein in radialer Richtung unterbrochener Kontakt zwischen der Sekundärmasse und der Hitzeschutzeinrichtung vor, so dass diese insbesondere vor Hitzestrahlung schützen kann.

Diesbezüglich sieht eine vorteilhafte Ausführungsvariante vor, dass die Hitzeschutzeinrichtung sich bis in einen Bereich zwischen einer Federkammer der Feder-Dämpfer-Einrichtung und einer Kupplungsscheibe erstreckt. Eine derartige Außengestaltung ist insbesondere dann vorteilhaft, wenn innerhalb der Federkammer im Sinne eines Schmiermittelsumpfes Schmiermittel, insbesondere Fett, gelagert ist.

Die vorliegende Hitzeschutzeinrichtung kann speziell zwischen der Primärmasse und der Sekundärmasse konstruktiv außergewöhnlich gut angeordnet bzw. platziert werden, wenn die Hitzeschutzeinrichtung an einer polygonalen Innenbegrenzungseinrichtung einer Federkammer der Feder-Dämpfer-Einrichtung angeordnet ist. Derartige polygonale Innenbegrenzungseinrichtungen sind aus dem Stand der Technik gut bekannt, insbesondere auch teilweise aus dem eingangs genannten Stand der Technik, sodass vorliegend auf derartige Innenbegrenzungen nicht weiter eingegangen wird.

Um axial aufeinander folgend angeordnete Baugruppen des Torsionsschwingungsdämpfers besonders großflächig mittels der Hitzeschutzeinrichtung voneinander trennen zu können, ist es vorteilhaft, wenn die Hitzeschutzeinrichtung sich im Wesentlichen scheibenförmig radial nach außen erstreckt.

Ist die Hitzeschutzeinrichtung radial weiter innen angeordnet als eine radial weiter außen angeordnete Dichtungseinrichtung der Primärmasse, kann die Hitzeschutzeinrichtung vorteilhafter Weise zugleich eine Wandung eines Schmiermittelaufnahmebereiches bilden.

Die Hitzeschutzeinrichtung kann besonders gut mit der radial weiter außen angeordneten Dichtungseinrichtung der Primärmasse zusammenwirken, wenn die Hitzeschutzeinrichtung mit ihrem freien Ende axial näher an der Primärmasse angeordnet ist als ein freies Ende einer radial weiter außen angeordneten Dichtungseinrichtung der Primärmasse.

Vorzugsweise ist dann das freie Ende der Hitzeschutzeinrichtung radial nach außen ausgerichtet, so dass etwaige Fettpartikel von dem freien Ende in die Fettkammer geschleudert werden, wenn der Torsionsschwingungsdämpfer dreht. Idealerweise ist in diesem Zusammenhang dann das freie Ende der radial weiter außen angeordneten Dichtungseinrichtung radial nach innen ausgerichtet.

Somit können sowohl das freie Ende der Hitzeschutzeinrichtung als auch das freie Ende der radial weiter außen angeordneten Dichtungseinrichtung besonders vorteilhaft und effektiv miteinander korrespondieren.

Insofern sieht eine besonders vorteilhafte Ausführungsvariante vor, dass das freie Ende der Hitzeschutzeinrichtung und das freie Ende der radial weiter außen angeordneten Dichtungseinrichtung radial aufeinander zu gerichtet angeordnet sind.

Weist die Hitzeschutzeinrichtung eine Schleudereinrichtung für Schmiermittel auf, kann die Hitzeschutzeinrichtung nicht nur vor Hitze schützen, sondern sie kann darüber hinaus Schmiermittel, wie etwa Fett, gezielt in einen Schmiermittelaufnahmebereich bzw. in einen Schmiermittelsumpf, wie etwa in eine Federkammer des Torsionsschwingungsdämpfers, schleudern. Hierdurch wird die Gefahr verringert, dass insbesondere Fett aus einer der Federkammern der Feder-Dämpfer-Einrichtung radial nach außen aus dem Torsionsschwingungsdämpfer gelangen kann.

Vorteilhafter Weise umfasst die Schleudereinrichtung eine Schleuderkante, welche von einem freien Ende der Hitzeschutzeinrichtung gebildet ist, wodurch das Schmiermittel auf baulich einfache Weise gezielt in eine gewünschte Richtung, speziell in eine Federkammer, geschleudert werden kann.

Darüber hinaus ist es vorteilhaft, wenn das freie Ende der radial weiter außen angeordneten Dichtungseinrichtung eine Schmiermittelauffangschräge aufweist. Mittels einer derartigen Schmiermittelauffangschräge gelingt es besonders gut, das Schmiermittel, welches von der Schleudereinrichtung, insbesondere von der Schleuderkante der Schleudereinrichtung hauptsächlich radial weggeschleudert wird, aufzufangen, wodurch es einem Schmiermittelsumpf zugeführt werden kann. Insofern kann auch ein Verlust an Schmiermittel am Torsionsschwingungsdämpfer weiter reduziert werden.

Ist die Schmiermittelauffangschräge der Primärmasse zugewandt, kann betriebssicher gewährleistet werden, dass das Schmiermittel beispielsweise einer Fettkammer, deren Gusswandung von der Primärmasse gebildet ist, zugeführt wird.

In diesem Zusammenhang sei hervorgehoben, dass in einer bevorzugten Ausführungsform das freie Ende der Hitzeschutzeinrichtung radial weiter innen liegt als das freie Ende der radial weiter außen angeordneten Dichtungseinrichtung. Auf diese Weise verbleibt ein axialer Abstand zwischen diesen beiden Baugruppen, so dass eine äußerst gute Durchlüftung durch den entsprechenden Ringspalt hindurch gewährleistet ist, was dementsprechend einer Reduktion der Wärmebelastung dient.

Die Feder-Dämpfer-Einrichtung kann im Sinne der Erfindung im einfachsten Fall unmittelbar durch eine Feder gebildet sein, da eine Feder, insbesondere eine Spiralfeder, nicht nur als federndes Bauteil sondern zugleich auch als dämpfendes Bauteil wirken kann. Insofern stellt eine Feder eine besonders einfache Bauweise der Feder-Dämpfer-Einrichtung dar. Insofern kann an der Anlageeinrichtung eine Feder direkt anliegen oder die Feder umfasst an ihren Enden etwa geeignete Federschuhe, die dann mit der Anlageeinrichtung wechselwirken bzw. an der Anlageeinrichtung anliegen können.

In vorliegendem Zusammenhang kann das Schmiermittel bzw. das Fett neben seinen schmierenden Eigenschaften auch als viskoses Dämpfungsmittel genutzt werden, wie bereits von gattungsgemäßen Torsionsschwingungsdämpfern hinlänglich bekannt.

Idealerweise umfasst die Antriebswellenaufnahme Befestigungsschraubenlöcher, durch welche hindurch Befestigungsschrauben angeordnet werden können. Insofern kann die Primärmasse mittels geeigneter Befestigungsschrauben direkt an die Antriebswelle angeschraubt werden.

Eine besonders hervorzuhebende Ausführungsvariante sieht dementsprechend vor, dass eine Schmiermittelkammer eine urgeformte Primärmassenwandung aufweist. Hierdurch gelingt es, einen Schmiermittelsumpf konstruktiv besonders einfach zumindest teilweise mittels der Primärmasse zu gestalten und in die Primärmasse zu integrieren, wodurch die Schmiermittelkammern sehr platzsparend innerhalb des Torsionsschwingungsdämpfers untergebracht werden können.

Besonders kompakt kann der vorliegende Torsionsschwingungsdämpfer gebaut werden, wenn die Schmiermittelkammer wenigstens eine mit Fett befüllbare Federkammer umfasst, in welchen die Feder-Dämpfer-Einrichtung angeordnet ist.

Insofern wird die Aufgabe der Erfindung auch von einem Torsionsschwingungsdämpfer mit eine Primärseite, mit eine Sekundärseite und mit einer Feder-Dämpfer-Einrichtung gelöst, bei welchem die Primärseite eine Primärmasse und die Sekundärseite eine Sekundärmasse umfasst, und bei welchem die Feder-Dämpfer-Einrichtung zwischen der Primärmasse und der Sekundärmasse Torsionsschwingungen dämpft, wobei sich der Torsionsschwingungsdämpfer durch eine urgeformte Primärmasse auszeichnet, welche wenigstens eine mit Schmiermittel befüllte Federkammer begrenzt.

Begrenzt die Primärmasse wenigstens eine Federkammer, welche mit Schmiermittel, wie etwa Fett, befüllbar und/oder befüllt ist, kann eine oder vorzugsweise mehrere Fettkammern und damit auch ein Schmiermittelsumpf konstruktiv besonders einfach und platzsparend zumindest teilweise innerhalb der Primärmasse integriert werden.

Erstreckt sich zudem die Primärmasse radial bis an eine Antriebswelle, insbesondere radial bis an eine Kurbelwelle, kann die urgeformte Primärmasse unmittelbar an der Antriebswelle bzw. an der Kurbelwelle angeflanscht und befestigt werden. Insofern ist es vorteilhaft, wenn die Primärmasse einen Graugussmaterialkörper aufweist, welcher sich radial bis an eine Antriebswelle, insbesondere radial bis an eine Kurbelwelle einer Brennkraftmaschine, erstreckt.

Eine vorteilhafte Ausführungsvariante sieht dementsprechend vor, dass die urgeformte Primärmasse von einer Federkammer der Feder-Dämpfer-Einrichtung radial bis an die Antriebswellenaufnahme, heran reicht. Insoweit kann die urgeformte Primärmasse sowohl mit einer Federkammer für die Feder-Dämpfer-Einrichtung als auch mit einer Antriebswellenaufnahme zum Befestigen an einer Antriebswelle ausgestattet werden.

Der Aufbau der vorliegenden Primärseite kann sich weiter enorm vereinfachen, wenn die Primärmasse einen Graugussmaterialkörper aufweist, welcher unmittelbar an einer Antriebswelle angeflanscht ist. Idealerweise ist ein derartiger Graugussmaterialköper der Primärmasse einstückig ausgebildet an einer Antriebswelle, insbesondere an einer Kurbelwelle, angeflanscht.

Ein Befestigen des Gussmaterialkörpers der Primärmasse an eine Antriebswelle erleichtert sich enorm, wenn die Primärmasse einen Gussmaterialkörper aufweist, welcher Aufnahmebohrungen für Befestigungsmittel zum Befestigen des Gussmaterialkörpers an einer Antriebswelle aufweist.

Ist die Primärmasse als eine Primärmassengraugussscheibe ausgebildet, kann sie ohne Weiteres gleichzeitig Fettkammern bzw. Federkammern und die Antriebswellenaufnahme umfassen, indem im radial innen liegenden Bereich entsprechend die Antriebswellenaufnahme und im radial außen liegenden Bereich.

Darüber hinaus wird die Aufgabe der Erfindung von einem Torsionsschwingungsdämpfer mit einer Primärseite, mit einer Sekundärseite und mit einer Feder-Dämpfer-Einrichtung gelöst, bei welchem die Primärseite eine Primärmasse und die Sekundärseite eine Sekundärmasse umfasst und bei welchem die Feder-Dämpfer-Einrichtung zwischen der Primärseite und der Sekundärseite Torsionsschwingungen dämpfen kann, wobei sich der Torsionsschwingungsdämpfer durch Anlageeinrichtungen für die Feder-Dämpfer-Einrichtung auszeichnet, die an einer drehbearbeiteten Befestigungsfläche der Primärmasse befestigt sind.

Anlageeinrichtungen für Feder-Dämpfer-Einrichtungen sind in Zusammenhang mit Torsionsschwingungsdämpfern im Allgemeinen bekannt. Werden derartige Anlageeinrichtungen vorteilhafter Weise jedoch an einer drehbearbeiteten Befestigungsfläche der Primärmasse befestigt, vereinfacht sich die Herstellung der Primärmasse enorm. Insofern kann der gesamte Torsionsschwingungsdämpfer wesentlich einfacher hergestellt werden. Insbesondere in Abweichung von Fräsvorgängen, mit denen komplexe Strukturen spanend hergestellt werden können, indem ein sich drehendes Werkzeug an das Werkstück herangeführt wird und ein lokaler Abtrag erfolgt, erfolgt bei Drehvorgängen eine Bearbeitung, wie beispielsweise ein Abtrag, über lange Wegstrecken, insbesondere indem das Werkstück um eine Achse rotiert. Hierdurch wird schnell und außerordentlich zentriert eine entsprechende Fläche bereitgestellt, was insbesondere für an sich in ihrer Anwendung ebenfalls rotierende Torsionsschwingungsdämpfer von Vorteil ist, da dann eine entsprechend hergestellt Fläche dementsprechend bezüglich einer Rotationsachse des Torsionsschwingungsdämpfers zentriert ausgerichtet hergestellt werden kann.

An dieser Stelle sei darauf hingewiesen, dass die Aufgabe der Erfindung dementsprechend auch von einem Verfahren zum Herstellen Primärmasse eines Torsionsschwingungsdämpfers gelöst wird, bei welchem die Primärmasse gegossen wird, wobei an der Primärmasse wenigstens eine Befestigungsfläche drehbearbeitet wird und an der Befestigungsfläche Anlageeinrichtungen für Komponenten von Feder-Dämpfer-Einrichtungen befestigt werden.

Es versteht sich, dass die drehbearbeitete Befestigungsfläche in vielfältiger Weise drehbearbeitet werden kann.

Besonders vorteilhaft ist es, wenn die Anlageeinrichtungen an einer spanend und/oder rollierend bearbeiteten Befestigungsfläche angeordnet sind. Insbesondere eine rollierend bearbeitete Befestigungsfläche kann bei einer rotationssymmetrischen Primärmasse konstruktiv besonders einfach eine sehr gute und feste Befestigungsfläche für die Anlageeinrichtungen bieten, die zudem für andere Zwecke, beispielsweise als Gleitfläche, genutzt werden kann. Selbiges gilt für drehspanend bearbeitete Flächen.

Eine bevorzugte Ausführvariante sieht vor, dass die Befestigungsfläche zugleich eine Führungsfläche für die Feder-Dämpfer-Einrichtung bildet, wodurch der Aufbau des Torsionsschwingungsdämpfers weiter vereinfacht werden kann.

Idealerweise ist die Führungsfläche für die Feder-Dämpfer-Einrichtung zugleich eine urgeformte und drehbearbeitete Primärmassengusswandung, welche eine Federkammer der Feder-Dämpfer-Einrichtung zumindest teilweise begrenzen kann.

Eine weitere vorteilhafte Ausführungsvariante sieht deshalb vor, dass die Primärmasse an einer Federkammern der Feder-Dämpfer-Einrichtung zugewandten Wandung Aufnahmen für die Anlageeinrichtungen aufweist. Derartige Aufnahmen können in einem besonders einfach gestalteten Fall durch eine rollierend bearbeitete Befestigungsfläche an der Primärmasse bereitgestellt werden.

Dementsprechend ist es vorteilhaft, wenn wenigstens eine den Fettkammern zugewandten Wandung der Primärmasse spanend oder rollierend bearbeitet ist.

Sind die Anlageeinrichtungen radial nach innen gerichtet an einem umlaufenden Kragen der Primärmasse befestigt, können entsprechende Befestigungsflächen an einer Primärmasseninnenseite bzw. innen an dem umlaufenden Kragen der Primärmasse spanend und/oder rollierend besonders einfach angearbeitet werden.

Umfassen die Anlageeinrichtungen jeweils einen Anlagenocken, mittels welcher Anlageflächen für die Feder-Dämpfer-Einrichtung innerhalb einer Federkammer gebildet sind, können Federenden und/oder Federschuhe der Federn besonders betriebssicher an den Anlageeinrichtungen anliegen.

Kumulativ oder alternativ können die Anlageeinrichtungen jeweils einen Anlagenocken umfassen, mittels welchen radiale Anlageflächen für insbesondere radial belastete Federschuhe der Feder-Dämpfer-Einrichtung gebildet sind. Hierdurch können insbesondere die radial belasteten Federschuhe besonders vorteilhaft innerhalb einer Federkammer der Feder-Dämpfer-Einrichtung geführt und abgestützt werden.

Sehr kompakt kann der Torsionsschwingungsdämpfer bauen, wenn wenigstens eine der Anlageeinrichtungen zwischen zwei Federn der Feder-Dämpfer-Einrichtung angeordnet ist. Insoweit kann dann eine entsprechende Anlageeinrichtung doppelt genutzt werden.

Es versteht sich, dass die Anlageeinrichtungen in vielfältiger Weise an der Primärmasse bzw. an der Befestigungsfläche der Primärmasse befestigt werden können. Besonders hervorzuheben ist, dass die Anlageeinrichtungen an der Primärmasse kraftschlüssig, formschlüssig und/oder stoffschlüssig befestigt sein können.

Auch können die vorliegenden Anlageeinrichtungen aus den unterschiedlichsten Materialien hergestellt werden. Besonders einfach und mit sehr guten Dämpfungseigenschaften können die Anlageeinrichtungen bereitgestellt werden, wenn die Anlageeinrichtungen aus einem Sintermaterial hergestellt sind. Hiermit ist es insbesondere einfach möglich, die Anlageeinrichtungen mit komplexen Anlageflächen für die Feder-Dämpfer-Einrichtung zu versehen, was insbesondere dann vorteilhaft ist, wenn die Feder-Dämpfer-Einrichtung Federschuhe umfasst, die einen komplexen Bewegungsablauf vollziehen sollen, wenn Drehmomente auf dem Torsionsschwingungsdämpfer lasten. Aber auch bei einfacheren Anordnungen, insbesondere auch bei Feder-Dämpfer-Einrichtungen ohne Federschuhen, können derartig ausgebildete Anlageeinrichtungen einfach an Formerfordernisse angepasst werden.

Weiter ist es vorteilhaft, wenn die Sekundärmasse an der Primärmasse, insbesondere an einem Gussmaterialkörper der Primärmasse, radial gelagert ist. Dieses ist baulich sehr einfach, insbesondere wenn auch die Sekundärmasse, wenigstens im Bereich dieses Lagers, urgeformt ist, so dass das Lager ein Material umfassen kann, welches beidseits wirksam die Gleitfähigkeit erhöht. Dieses gilt insbesondere bei der Verwendung von Grauguss, in welchen sich ein Gleitlagerkunststoff, wie beispielsweise PTFE (Polytetrafluorethylen), bereits nach kurzer Zeit einarbeiten und ein hervorragend wirksames Gleitlager bildet, wobei diese Effekt dann bei dieser Ausgestaltung besonders einfach sowohl primärseitig als auch sekundärseitig genutzt werden können.

Eine weitere besonders vorteilhafte Ausführungsvariante sieht deshalb auch vor, dass die Primärmasse einen Lagersitz für die Sekundärmasse aufweist. Dadurch, dass ein Lagersitz für die Sekundärmasse unmittelbar an der Primärmasse vorgesehen ist, kann der Torsionsschwingungsdämpfer nochmals kompakter gebaut werden. Allein schon aus diesem Grund bildet dieses Merkmal unabhängig von den übrigen Merkmalen der Erfindung einen Torsionsschwingungsdämpfer vorteilhaft weiter. In diesem Zusammenhang sei der Vollständigkeit halber erläutert, dass ggf. auch die Sekundärmasse einen Lagersitz für die Primärmasse aufweisen kann, um die vorgenannten Vorteile zu erzielen.

Eine weitere besonders bevorzugte Ausführungsvariante sieht vor, dass die Primärmasse eine Lagereinrichtung für eine Getriebeeingangswelle aufweist. Auf diese Weise kann eine sehr gute Führungsgenauigkeit der Getriebeeingangswelle erzielt werden, da sie an der Primärmasse gelagert ist. Andererseits wird, insbesondere in Abweichung von der DE 34 48 595 C2, die Sekundärmasse und eine hiermit verbundene Kupplung hiermit nicht belastet, so dass die entsprechenden, diesbezüglichen Lagerkräfte reduziert und mithin diese Lager entsprechend entlastet sind.

Es versteht sich, dass eine derartige Lagereinrichtung vielfältig gestaltet sein kann. Besonders kompakt lässt sich die Lagereinrichtung realisieren, wenn zwischen der Primärmasse und einer Getriebeeingangswelle ein Gleitlager angeordnet ist. Hierbei wurde festgestellt, dass insbesondere entsprechend kleine Gleitlager, die naturgemäß radial weit innen angeordnet sein müssen, da noch Bauraum für eine Lagerung der Sekundärmasse verbleiben muss, eine ausreichend hohe Traglast selbst bei geringeren Motordrehzahlen, beispielsweise auch im Leerlauf eines Antriebsmotors, erzielen können.

Schwingungen an einer Getriebeeingangswelle bzw. an einem Getriebeeingangswellenende können besonders gut reduziert bzw. gedämpft werden, wenn die Lagereinrichtung für die Getriebeeingangswelle zwischen einem Wellenzapfenende der Getriebeeingangswelle und einem Lagersitz einer Kupplungsscheibe an der Getriebeeingangswelle angeordnet ist.

Idealerweise ist die Lagereinrichtung für die Getriebeeingangswelle weiter innen angeordnet als ein radialer Sekundärmassenlagerbereich. Insofern können sowohl eine Primärmassenlagereinrichtung als auch ein Sekundärmassenlagerbereich axial besonders platzsparend an dem Torsionsschwingungsdämpfer realisiert sein.

Eine weitere besonders kompakt bauende Ausführungsvariante sieht vor, dass bei einem Torsionsschwingungsdämpfer eine Lagereinrichtung für eine Getriebeeingangswelle an der Primärmasse axial primärmassenseitig eines Sekundärmassenlagerbereichs, vorzugsweise eines radialen Sekundärmassenlagerbereichs an der Primärmasse, angeordnet ist. Hierbei versteht es sich, dass die Lagereinrichtung und der Sekundärmassenlagerbereich axial auch überlappen können, wenn diese radial auf verschiedenen Durchmessern zu finden sind, wobei es dann in diesem Zusammenhang darauf ankommt, dass wenigstens ein Bereich der Lagereinrichtung axial weiter in Richtung Primärmasse zu finden ist, als das auf die Primärmasse weisende Ende des Sekundärmassenlagerbereichs.

An dieser Stelle sei angemerkt, dass die Merkmale im Zusammenhang mit den vorstehend beschriebenen Lagereinrichtungen für eine Getriebeeingangswelle herkömmliche Torsionsschwingungsdämpfer bereits vorteilhaft weiterbilden. Insofern sind diese Merkmale auch ohne die übrigen Merkmale vorliegender Erfindung entsprechend vorteilhaft. Selbiges gilt für einen Antriebsstrang mit einem derartigen Torsionsschwingungsdämpfer und einem Getriebe, dessen Getriebeeingangswelle an dem vorgenannten Gleitlager gelagert ist. Auch gilt dieses insbesondere für einen derartigen Antriebsstrang, bei welchem an der Sekundärmasse des Torsionsschwingungsdämpfers eine Kupplung zu dem Getriebe vorgesehen ist.

Sind entsprechend der Ausführungen der vorstehenden Absätze in einer bevorzugten Variante sowohl die Primärmasse als auch eine Kupplungseinrichtung unmittelbar an einer gemeinsamen Getriebeeingangswelle eines Antriebsstranges gelagert, kann dieser einen außergewöhnlich einfachen Aufbau erhalten, wobei die zugehörigen Lagereinrichtungen entsprechend der Ausführungen der vorstehenden Absätze ausgestaltet sein können.

Weitere Vorteile, Ziele und Eigenschaften vorliegender Erfindung werden anhand nachfolgender Beschreibung anliegender Zeichnung erläutert, in welcher beispielhaft Torsionsschwingungsdämpfer mit einer urgeformten Primärmasse, mit einem Schmiermittelsumpf, mit Anlageeinrichtungen für Feder-Dämpfer-Einrichtungen, mit einer an der Primärmasse angeordneten Dichtungseinrichtung, mit einer Hitzeschutzeinrichtung und mit einer eine Lagereinrichtung für eine Getriebeeingangswelle aufweisenden Primärmasse dargestellt sind. Komponenten, welche in den Figuren wenigstens im Wesentlichen hinsichtlich ihrer Funktion übereinstimmen, können hierbei mit identischen Bezugszeichen gekennzeichnet sein, wobei diese Komponenten gegebenenfalls nicht in allen Figuren im Einzelnen bezeichnet und erläutert sind.

Es zeigen
- Figur 1: schematisch einen Querschnitt eines Torsionsschwingungsdämpfers im Bereich einer Federkammeranordnung,
- Figur 2: schematisch einen Längsschnitt eines Getriebes mit dem Torsionsschwingungsdämpfer aus der Figur 1, einer Kupplungseinrichtung sowie einer Getriebeeingangswelle und eines an dem Getriebegehäuse angeflanschten Motorgehäuses,
- Figur 3: schematisch eine längs geschnittene Detailansicht des Torsionsschwingungsdämpfers aus den Figuren 1 und 2,
- Figur 4: schematisch eine längs geschnittene Detailansicht einer alternativ gestalteten Primärseite und Sekundärseite eines Torsionsschwingungsdämpfers,
- Figur 5: schematisch eine weitere längs geschnittene Detailansicht einer weiteren alternativ gestalteten Primärseite und Sekundärseite eines Torsionsschwingungsdämpfers,
- Figur 6: schematisch eine weitere längs geschnittene Detailansicht einer weiteren alternativ gestalteten Primärseite und Sekundärseite eines Torsionsschwingungsdämpfers, und
- Figur 7: schematisch eine weitere längs geschnittene Detailansicht einer weiteren alternativ gestalteten Primärseite und Sekundärseite eines Torsionsschwingungsdämpfers.

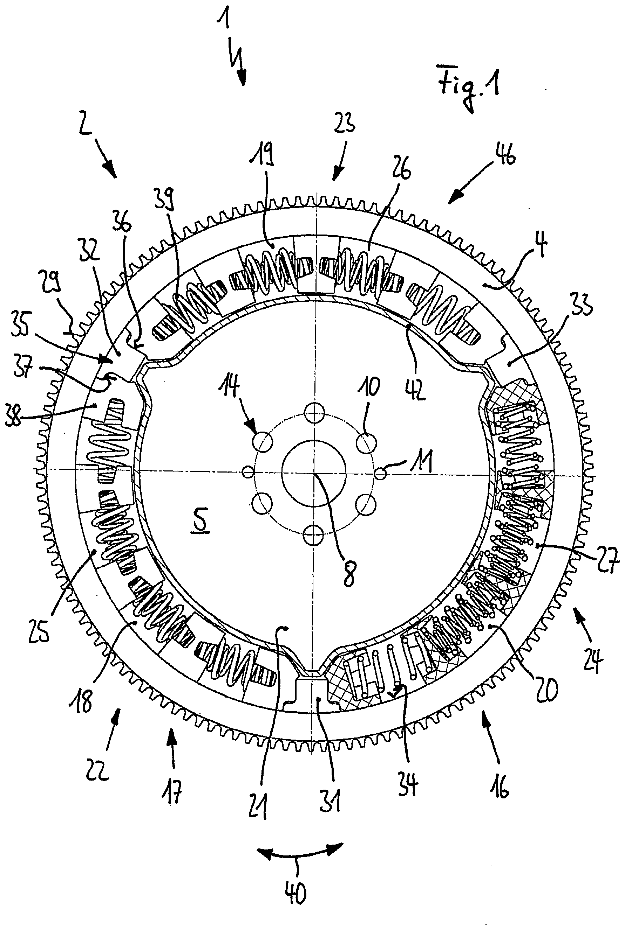

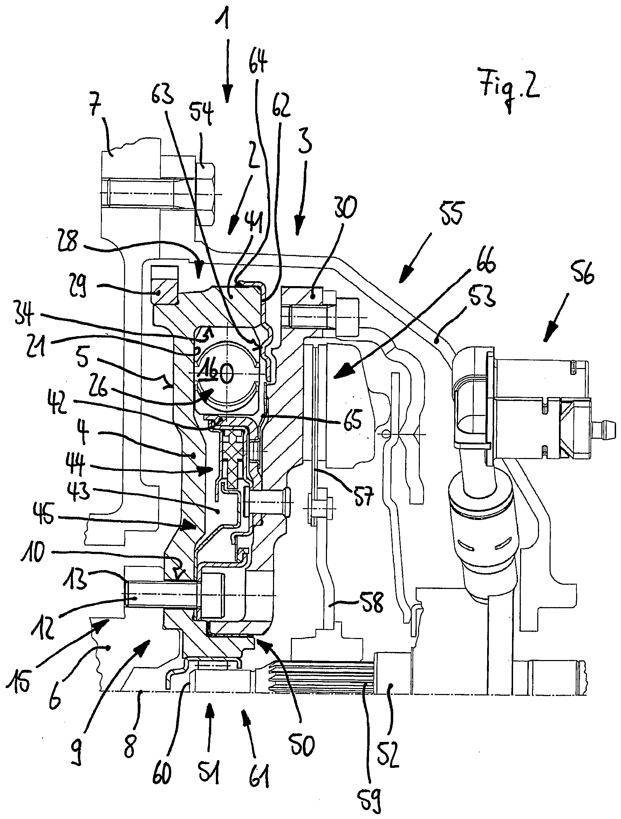

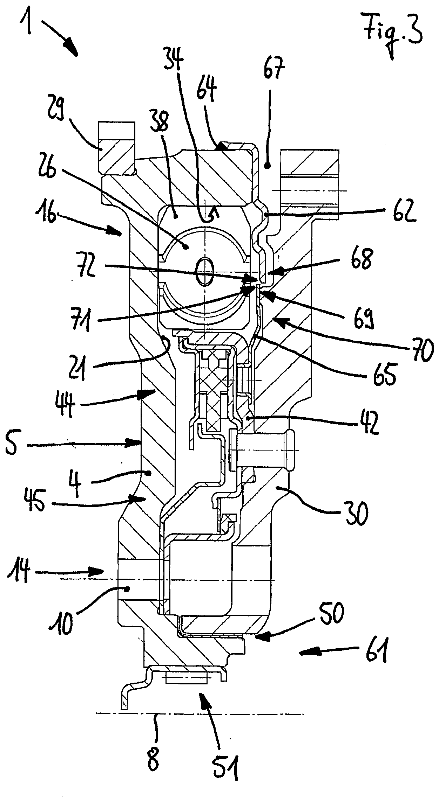

Der in der Figur 1 im Querschnitt gezeigte Torsionsschwingungsdämpfer 1 weist eine Primärseite 2 und eine Sekundärseite 3 auf (siehe auch Figuren 2 und 3). Die Primärseite 2 umfasst hierbei eine Primärmasse 4, welche vollständig urgeformt hergestellt ist.

In diesem Ausführungsbeispiel ist die urgeformte Primärmasse 4 als ein Graugussmaterialkörper 5 ausgebildet, welcher sich radial bis an eine Antriebswelle 6 (siehe Figur 2) heran erstreckt. Die Antriebswelle 6 ist in diesem Ausführungsbeispiel eine Kurbelwelle einer hier nur durch ein Motorgehäuse 7 illustrierten Brennkraftmaschine. Die Antriebswelle 6 kann hierbei um eine Rotationsachse 8 des Torsionsschwingungsdämpfers 1 rotieren.

Die urgeformte Primärmasse 4 weist darüber hinaus unmittelbar eine Antriebswellenaufnahme 9 auf (siehe Figur 2), welche einstückig an der urgeformten Primärmasse 4 bzw. dem Graugussmaterialköper 5 ausgebildet ist. Dies bedeutet, dass die Primärmasse 4 des Torsionsschwingungsdämpfers 1 unmittelbar an die Antriebswelle 6 angeflanscht werden kann. Hierzu umfasst die Antriebswellenaufnahme 9 einerseits insgesamt sieben Befestigungsschraubenlöcher 10 und zwei Positionierlöcher 11 (hier nur exemplarisch beziffert). Durch die Befestigungsschraubenlöcher 10 hindurch können geeignete Befestigungsschrauben 12 (siehe Figur 2) hindurch gesteckt werden, die dann jeweils in geeignete Befestigungsschraubengewinde 13 der Antriebswelle 6 eingeschraubt werden können.

Die Befestigungsschraubenlöcher 10 stellen somit Aufnahmebohrungen 14 an dem Gussmaterialkörper 5 dar, sodass der Gussmaterialkörper 5 mit geeigneten Befestigungsmitteln 15, wie sie die Befestigungsschrauben 12 darstellen, problemlos an der Antriebswelle 6 befestigt werden kann.

Dementsprechend weist die Primärmasse 4 einen Graugussmaterialkörper 5 auf, welcher einerseits unmittelbar an der Antriebswelle 6 und andererseits einstückig ausgebildet an der Antriebswelle 6 angeflanscht ist.

Darüber hinaus umfasst der Torsionsschwingungsdämpfer 1 eine Feder-Dämpfer-Einrichtung 16 sowie einen Schmiermittelsumpf 17, wobei der Schmiermittelsumpf 17 derart innerhalb des Torsionsschwingungsdämpfers 1 platziert ist, dass er sowohl mit der Primärseite 2 als auch mit der Sekundärseite 3 wechselwirkt.

Der Schmiermittelsumpf 17 umfasst hierbei drei Schmiermittelaufnahmebereiche 18, 19 und 20, welche konstruktiv vorteilhaft zumindest teilweise von einer Gusswandung 21 der Primärmasse 4 gebildet sind.

Vorliegend wird als Schmiermittel Fett verwendet, sodass der Schmiermittelsumpf 17 insbesondere auch Fettkammern 22, 23 und 24 umfasst, welche eine urgeformte Primärmassengusswandung 21 aufweisen. Der Begriff Schmiermittelaufnahmebereich 18, 19 und 20 kann bei diesem Ausführungsbeispiel somit synonym zu dem Begriff Fettkammer 20, 23 und 24 verwendet werden.

Der Torsionsschwingungsdämpfer 1 kann besonders kompakt gebaut werden, wenn der Schmiermittelsumpf 17 mit Fett befüllbare Federkammern 25, 26 und 27 umfasst, in welche Komponenten der Feder-Dämpfer-Einrichtung 16 angeordnet sind. Vorteilhafter Weise können die Schmiermittelaufnahmebereiche 18, 19 und 20 und damit auch die Fettkammern 22, 23 und 24 an dem Torsionsschwingungsdämpfer 1 baulich besonders einfach realisiert werden, wenn die Federkammern 25, 26 und 27 der Feder-Dämpfer-Einrichtung 16 mit Schmiermitteln, wie insbesondere mit Fett, befüllt werden bzw. sind. In dieser Art und Weise ist der Torsionsschwingungsdämpfer 1 ausgestaltet.

Somit weist die Primärmasse 4 des Torsionsschwingungsdämpfers leinen Graugussmaterialkörper 5 auf, welcher zumindest von einer der Fettkammern 25, 26 bzw. 27 der Feder-Dämpfer-Einrichtung 16 radial bis an die Antriebswellenaufnahme 9 heran reicht. Hierdurch kann die Primärmasse 4 als eine Primärmassengraugussscheibe 28 ausgebildet werden, welche einerseits mit den Federkammern 25, 26 und 27 sowie andererseits mit den Fettkammern 22, 23 und 24, welche bei diesem Ausführungsbeispiel mit den Federkammern 25, 26 und 27 identisch sind, einen Schmiermittelsumpf 17 an dem Torsionsschwingungsdämpfer 1 realisieren. Darüber hinaus kann mittels der Primärmassengraugussscheibe 28 radial innen sogleich eine Antriebswellenaufnahme 9 ausgebildet werden, wobei radial außen an der Primärmassengraugussscheibe 28 auch ein Anlasserzahnkranz 29 vorgesehen werden kann.

Wie die Primärseite 2 des Torsionsschwingungsdämpfers 1 eine Primärmasse 4 umfasst, so umfasst die Sekundärseite 3 des Torsionsschwingungsdämpfers 1 eine Sekundärmasse 30, wobei mittels der Feder-Dämpfer-Einrichtung 16 zwischen der Primärmasse 4 und der Sekundärmasse 30 Torsionsschwingungen an dem Torsionsschwingungsdämpfer 1 gedämpft werden können.

Als ein weiteres herausragendes Merkmal des Torsionsschwingungsdämpfers 1 sind Anlageeinrichtungen 31, 32 und 33 zu nennen, an welchen sich die Komponenten der Feder-Dämpfer-Einrichtung 16 abstützen können.

Derartige Anlageeinrichtungen 31, 32 und 33 für die Feder-Dämpfer-Einrichtung 16 sind in ähnlicher Weise aus dem Stand der Technik bereits bekannt, jedoch sind diese in der Regel bisweilen von der Primärmasse 4 der Primärseite 2 ausgeformt oder mittels eines zusätzlichen Trägerbleches, welches vorteilhafter Weise hier nicht mehr vorgesehen werden muss, ausgebildet. Hierdurch bedingt war insbesondere die Primärmasse 4 bzw. die Primärseite 2 aufwändiger herzustellen.

Vorteilhafter Weise sind die Anlageeinrichtungen 31, 32 und 33 dieses Ausführungsbeispiels entsprechend eines Aspekts vorliegender Erfindung als separate Bauteile ausgebildet und an einer drehbearbeiteten Befestigungsfläche 34 der Primärmasse 4 befestigt. Dadurch, dass die Anlageeinrichtungen 31, 32 bzw. 33 an der drehbearbeiteten Befestigungsfläche 34 befestigt sind, kann die Primärmasse 4 ohne derartige Anlageeinrichtungen 31, 32 und 33 gefertigt bzw. gegossen und anschließend auch an der Befestigungsfläche 34 drehbearbeitet werden. Die Anlageeinrichtungen 31, 32 und 33 können anschließend an der Primärmasse 4 vorteilhafter Weise besonders einfach, kraftschlüssig, formschlüssig und/oder stoffschlüssig befestigt werden. Zudem können die Anlageeinrichtungen 31, 32 und 33 kostengünstig aus einem Sintermaterial hergestellt werden. Auf diese Weise kann insbesondere auch die Befestigungsfläche 34 einfach und betriebssicher sehr präzise gefertigt werden.

Vorzugsweise umfassen die Anlageeinrichtungen 31, 32, 33 jeweils einen Anlagenocken 35 (hier nur exemplarisch beziffert), mittels welchen Anlageflächen 36 (hier ebenfalls nur exemplarisch beziffert) für Komponenten der Feder-Dämpfer-Einrichtung 16 innerhalb einer der Federkammern 25, 26 oder 27 gebildet sind.

Vorteilhafter Weise bilden die Anlagenocken 35 bzw. deren Anlageflächen 36 sogleich radiale Anlageflächen 37 für radial belastete Federschuhe 38 (hier nur exemplarisch beziffert) der Feder-Dämpfer-Einrichtung 16 aus. In diesem Ausführungsbeispiel ist jede der Anlageeinrichtungen 31, 32 bzw. 33 zwischen zwei Federschuhen 38 der Feder-Dämpfer-Einrichtung 16 angeordnet.

An dieser Stelle sei angemerkt, dass hierbei in jeder der Federkammern 25, 26, 27 jeweils vier Einzelfedern 39 und jeweils fünf Federschuhe 38 als Komponenten der Feder-Dämpfer-Einrichtung 16 angeordnet sind. In einem besonders einfachen Ausführungsbeispiel kann eine Feder-Dämpfer-Einrichtung 16 auch nur von einer oder mehreren Einzelfedern 39 gebildet sein, da Einzelfedern 39 nicht nur federnd sondern zugleich auch dämpfend wirken können.

Die Anlageeinrichtungen 31, 32, bzw. 33 begrenzen in Umfangsrichtung 40 der Primärmasse 4 die einzelnen Federkammern 25, 26 und 27. Radial außen werden die Federkammern 25, 26 und 27 von der Primärmasse 4, insbesondere von einem umlaufenden Kragen 41 der Primärmasse 4, begrenzt. Demzufolge sind die Anlageeinrichtungen 31, 32 und 33 radial nach innen gerichtet, zeigen also auf die Rotationsachse 8 des Torsionsschwingungsdämpfers 1 zu, wobei die Anlageeinrichtungen 31, 32 und 33 innen an dem umlaufenden Kragen 41 der Primärmasse 4 befestigt sind.

Die drehbearbeitete Befestigungsfläche 34 kann als solche besonders vorteilhaft bearbeitet werden, wenn sie spanend bzw. rollierend hergestellt ist. Insbesondere dadurch, dass die Primärmasse 4 auch an der Innenseite des umlaufenden Kragens 41 rotationssymmetrisch ausgebildet ist, kann die drehbearbeitete Befestigungsfläche 34 verfahrenstechnisch einfach hergestellt werden.

Vorteilhafter Weise bildet die derart hergestellte Befestigungsfläche 34 zugleich eine Führungsfläche (hier nicht gesondert beziffert) für die Komponenten der Feder-Dämpfer-Einrichtung 16, insbesondere für die Federschuhe 38, welche innerhalb der Federkammern 25, 26 und 27 entlang der rollierten Befestigungsfläche 34 gleiten können. Die Befestigungsfläche 34 bildet somit zugleich eine Wandung der Federkammern 25, 26 und 27 an der Primärmasse 4 aus.

Radial weiter innen werden bei diesem Ausführungsbeispiel die Federkammern 25, 26 und 27 mittels einer polygonalen Innenbegrenzungseinrichtung 42 begrenzt, wobei diese polygonale Innerbegrenzungseinrichtung 42 an der Sekundärmasse 30 gehalten wird.

In einem Bauraum 43 (siehe insbesondere Figuren 2 und 3) im Bereich der polygonalen Innenbegrenzungseinrichtung 42 sind noch Reibeinrichtungen 44 und sonstige Funktionsbleche 45 vorgesehen, auf welche hier jedoch nicht weiter eingegangen wird.

Konzentrisch um die Rotationsachse 8 herum befindet sich ein Aufnahmeraum 46 der Feder-Dämpfer-Einrichtung 16, wobei der Aufnahmeraum 46 in Umfangsrichtung 40 jeweils von den Anlageeinrichtungen 31, 32 und 33 für die Federschuhe 38 und jeweils von einer Erhebung 47, 48 bzw. 49 der polygonalen Innenbegrenzungseinrichtung 42 in die drei Federkammern 25, 26 und 27 des Torsionsschwingungsdämpfers 1 unterteilt ist.

Der Torsionsschwingungsdämpfer 1 weist, wie insbesondere in den Figuren 2 und 3 dargestellt, noch ein Lagersitz 50 der Primärmasse 4 auf, an welchem die Sekundärmasse 30 direkt an der Primärmasse 4 gelagert werden kann. Dementsprechend ist die Sekundärmasse 30 sowohl radial als auch axial insbesondere auch an dem Gussmaterialkörper 5 der Primärmasse 4 gelagert.

Axial auf Seite der Primärmasse 2 bzw. auf Seite des Motors bezüglich dem Lagersitz 50 befindet sich noch eine Lagereinrichtung 51 für eine Getriebeeingangswelle 52, wobei letztere radial innerhalb des Lagersitzes 50 angeordnet ist, so dass Lagersitz 50 und Lagereinrichtung 51 axial überlappen. Insofern ist die Lagereinrichtung 51 näher an der Rotationsachse 8 angeordnet als der Lagersitz 50. Ein Teil der Lagereinrichtung 51 ragt axial in Richtung der Primärmasse 2 über den Lagersitz 50 hinaus, so dass die Lagereinrichtung 51 primärseitig bezüglich des Lagersitzes 50 angeordnet ist.

Die Getriebeeingangswelle 52 liegt axial vor der Antriebswelle 6, wobei die Antriebswelle 6 und die Getriebeeingangswelle 52 um die gemeinsame Rotationsachse 8 rotieren können. Die Getriebeeingangswelle 52 gehört zu einem Getriebe, welches in der Darstellung nach der Figur 2 durch ein Getriebegehäuse 53 illustriert ist. Das Getriebegehäuse 53 und das Motorgehäuse 7 sind mittels einer Verschraubung 54 miteinander fest verschraubt. Innerhalb des Getriebegehäuses 53 ist noch eine Kupplungseinrichtung 55 angeordnet, welche über eine Kupplungsbetätigung 56 betätigt werden kann. Da insbesondere derartige Kupplungseinrichtungen 55 aus dem Stand der Technik hinreichend bekannt sind, wird vorliegend nur insoweit auf die Kupplungseinrichtung 55 eingegangen, dass ihre Kupplungsscheibe 57 mittels einer Kupplungsscheibenhalterung 58 über eine Splineverbindung 59 mit der Getriebeeingangswelle 52 drehfest verbunden ist.

Bei diesem Ausführungsbeispiel ist die Lagereinrichtung 51 für die Getriebeeingangswelle 52 zwischen einem Wellenzapfenende 60 der Getriebeeingangswelle 52 und der Splineverbindung 59 der Kupplungsscheibe 57 vorgesehen.

Die Lagereinrichtung 51 kann beispielsweise auch als Gleitlager ausgebildet sein. Speziell in diesem Ausführungsbeispiel ist die Lagereinrichtung 51 als Nadellager ausgebildet.

An dem umlaufenden Kragen 41 der Primärmasse 4 ist eine Dichtungseinrichtung 62 zu finden ist, welche radial nach innen zwischen die Primärmasse 4 und die Sekundärmasse 30 hinein ragt. Die Dichtungseinrichtung 62 ist hierbei als Metallblechscheibe ausgeformt, welche der Gusswandung 21 der Primärmasse 4 gegenüber liegt und hierbei eine zusätzliche Wandung 63 des Aufnahmeraums 46 der Feder-Dämpfer-Einrichtung 16 bzw. der Federkammern 25, 26, 27 bzw. der Fettkammern 22, 23 und 24 bildet.

Die Dichtungseinrichtung 62 ist stoffschlüssig an der Primärmasse 4 angeordnet, wobei die Dichtungseinrichtung 62 speziell in diesem Ausführungsbeispiel an der Primärmasse 4 angeschweißt ist. Und zwar ist die Dichtungseinrichtung 62 in Umfangsrichtung 40 derart vollständig an der Primärmasse 4 angeschweißt, dass eine in Umfangsrichtung 40 durchgängige Schweißnaht 63 zwischen der Dichtungseinrichtung 62 und der Primärmasse 4 ausgebildet ist. Insofern kann auf eine zusätzliche Abdichtung verzichtet werden.

Darüber hinaus umfasst der Torsionsschwingungsdämpfer 1 eine zusätzliche Hitzeschutzeinrichtung 65, welche zumindest bereichsweise zwischen der Primärmasse 4 und der Sekundärmasse 30 angeordnet ist. Die Hitzeschutzeinrichtung 65 schützt insbesondere die mit Schmiermittel bzw. Fett gefüllten Federkammern 25, 26 und 27 vor einer kritischen Erhitzung, etwa auf Grund von Reibungswärme der Kupplungseinrichtung 55. Insofern kann das Schmiermittel bzw. das Fett vor einer frühzeitigen Alterung wesentlich besser geschützt werden als ohne die Hitzeschutzeinrichtung 65. Hierdurch ist die Lebensdauer des Torsionsschwingungsdämpfers 1 verlängert.

Deshalb ist es vorteilhaft, dass sich die Hitzeschutzeinrichtung 65 bis in einen Bereich 66 zwischen den Federkammern 25, 26 bzw. 27 der Feder-Dämpfer-Einrichtung 16 und der Kupplungsscheibe 57 der Kupplungseinrichtung 55 erstreckt.

Die Hitzeschutzeinrichtung 65 ist hierbei an der polygonalen Innenbegrenzungseinrichtung 42 befestigt. Darüber hinaus erstreckt sich die Hitzeschutzeinrichtung 65 scheibenförmig radial nach außen, wobei die Hitzeschutzeinrichtung 65 radial weiter innen angeordnet ist als die radial weiter außen angeordnete Dichtungseinrichtung 62 der Primärmasse 4.

Damit von der Hitzeschutzeinrichtung 65 radial nach außen geschleudertes Schmiermittel bzw. Fett innerhalb der Federkammern 25, 26 und 27 verbleibt und nicht übermäßig durch einen Spalt 67 zwischen der Primärmasse 4 und der Sekundärmasse 30 radial nach außen gelangen kann, ist es vorteilhaft, dass die Hitzeschutzeinrichtung 65 mit ihrem freien Ende 68 axial näher an der Primärmasse 4 angeordnet ist als ein freies Ende 69 der radial weiter außen angeordneten Dichtungseinrichtung 62 der Primärmasse 4, wodurch sich ein axialer Ringspalt zwischen beiden freien Enden 68, 69 ergibt der eine ausreichende Durchlüftung durch den Spalt 67 gewährleistet.

Somit bildet die Hitzeschutzeinrichtung 65 sogleich eine Schleudereinrichtung 70 für Schmiermittel bzw. Fett im Bereich der Federkammern 25, 26 bzw. 27. Hierbei weist die Schleudereinrichtung 70 eine Schleuderkante 71 auf, welche von dem freien Ende 68 der Hitzeschutzeinrichtung 65 gebildet ist.

Vorteilhafter Weise korrespondiert diese Schleuderkante 71 mit einer Schmiermittelauffangschräge 72, welche an dem freien Ende 69 der radial weiter außen angeordneten Dichtungseinrichtung 62 vorgesehen ist. Da die Schmiermittelauffangschräge 72 der Primärmasse 4 zugewandt ist, gelangt Schmiermittel bzw. Fett, welches auf die Schmiermittelauffangschräge 72 prallt immer zurück in die Federkammern 25, 26 bzw. 27. Somit ist die Gefahr verringert, dass Schmiermittel bzw. Fett unbeabsichtigt durch den Spalt 67 hindurch aus dem Torsionsschwingungsdämpfer 1 hinaus gelangt.

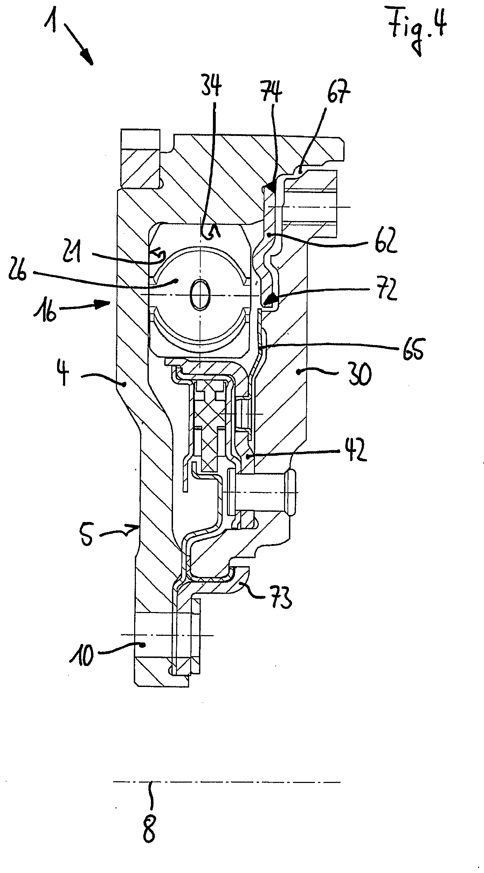

Der Torsionsschwingungsdämpfer 1 gemäß der Figur 4 weist eine alternativ gestaltete Primärmasse 4 sowie eine alternativ gestaltete Sekundärmasse 30 auf. Die Sekundärmasse 30 ist hierbei nicht direkt auf den Graugusskörper 5 der Primärmasse 4 abgestützt und an diesem gelagert sondern an einem zusätzlichen, als Zentralflansch ausgebildeten Trägerblech 73, welches mittels Befestigungsschrauben (hier nicht dargestellt) gemeinsam mit der Primärmasse 4 an der hier nicht näher gezeigten Antriebswelle 6 angeschraubt und somit befestigt ist.

Die Primärmasse 4 bildet hierbei ebenfalls einerseits eine Gusswandung 21 sowie andererseits eine drehbearbeitete Befestigungsfläche 34, mittels welchen ebenfalls Federkammern 25, 26 und 27 des Torsionsschwingungsdämpfers 1 begrenzt werden. Innerhalb der Federkammern 25, 26 und 27 sind, wie bei dem ersten Ausführungsbeispiel, Komponenten der Feder-Dämpfer-Einrichtung 16 angeordnet, wobei zwischen jeder der Federkammern 25, 26 und 27 jeweils nicht näher gezeigte Anlageeinrichtungen 31, 32 und 33 angeordnet sind, wobei diese Anlageeinrichtungen 31, 32 und 33 an der drehbearbeiteten Befestigungsfläche 34 befestigt sind. Die Federkammern 25, 26 und 27 sind auch hier mit Fett gefüllt.

Um zu verhindern, dass das Fett radial aus den Federkammern 25, 26 und 27, etwa durch einen Spalt 67 hindurch zwischen der Primärmasse 4 und der Sekundärmasse 30 hinaus gelangen kann, ist an der Primärmasse 4 eine geeignete Dichtungseinrichtung 62 angelötet, wobei eine entsprechende Lötnaht 74 in Umfangsrichtung 40 durchgängig vorgesehen ist. Es versteht sich, dass alternativ hierzu auch eine Schweißnaht vorgesehen sein kann. Ebenso ist es denkbar, in der Primärmasse 4 im Bereich der Dichtungseinrichtung 62 einen umlaufenden radialen Anstich, oder ähnliche Ausnehmungen, vorzusehen, in welchen Teile der Dichtungseinrichtung 62 verstemmt werden, so dass eine formschlüssige Verbindung bereitgestellt wird. Bei letzterer Alternative kann eine Dichtung, wie beispielsweise der nachfolgend erläuterte Dichtungsring 82, noch zusätzlich eingesetzt werden. Ebenso können bei letzterer Alternative kumulativ Schweiß- oder Lotstellen vorgesehen sein.

Die Dichtungseinrichtung 62 weist auch bei diesem Ausführungsbeispiel eine Schmiermittelauffangschräge 72 auf, mittels welcher von der Hitzeschutzeinrichtung 65 radial fort geschleudertes Fett wieder in die Federkammern 25, 26 bzw. 27 zurückgeleitet wird.

Die Hitzeschutzeinrichtung 65 ist hierbei jedenfalls an der polygonalen Innerbegrenzungseinrichtung 42 befestigt und dient zusätzlich als Hitzeschutz bezüglich der hier nicht gezeigten Kupplungseinrichtung 55 (siehe deshalb Figur 2).

Bei diesem Ausführungsbeispiel ist auf eine Getriebeeingangswellenlagerung verzichtet, wobei diese jedoch, je nach Erfordernissen, ohne Weiteres radial innen, insbesondere auch an dem Trägerblech 73 oder einem sonstigen Zentralflansch der Primärseite 2 vorgesehen sein kann.

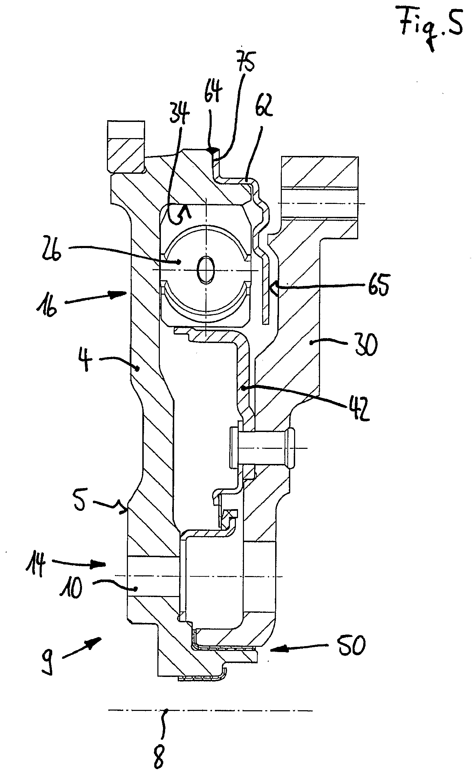

Nach dem Ausführungsbeispiel gemäß der Figur 5 umfasst der Torsionsschwingungsdämpfer 1 eine weiter alternativ ausgebildete Primärmasse 4 und eine Sekundärmasse 30, wobei die Sekundärmasse 30 wieder unmittelbar an einem Lagersitz 50 des Graugussmaterialkörpers 5 der Primärmasse 4 gelagert ist. Zwar sind die Primärmasse 4 und die Sekundärmasse 30 hierbei wiederum etwas anders als die vorstehend erläuterten Ausführungsbeispiele gestaltet, jedoch bildet die Primärmasse 4 auch hierbei einerseits eine Antriebswellenaufnahme 9 mit Befestigungsschraubenlöchern 10 bzw. Aufnahmebohrungen 14 für Befestigungsmittel 15 (hier nicht gezeigt) und andererseits Federkammern 25, 26 und 27 aus.

Die Federkammern 25, 26 und 27 nehmen wieder Komponenten der Feder-Dämpfer-Einrichtung 16 auf und sind zumindest teilweise mit Fett gefüllt. Zwischen jeder der Federkammern 25, 26 bzw. 27 sind die Anlageeinrichtungen 31, 32 bzw. 23 für die Komponenten der Feder-Dämpfer-Einrichtung 16 vorgesehen, wobei die Anlageeinrichtungen 31, 32 und 33 an der drehbearbeiteten Befestigungsfläche 34 der Primärmasse 4 befestigt sind.

Radial außen weist die Primärmasse 4 wiederum eine Dichtungseinrichtung 62 auf, die entlang der Umfangsrichtung 40 punktuell an der Primärmasse 4 angeschweißt ist. Da die Schweißnaht 64 nicht umlaufend ausgebildet ist, ist zwischen der Dichtungseinrichtung 62 und der Primärmasse 4 eine zusätzliche Dichtungsmasse 75 vorgesehen.

Die Dichtungseinrichtung 62 ist hierbei derart weit radial nach innen in den Spalt 67 zwischen der Primärmasse 4 und der Sekundärmasse 30 heruntergezogen, sodass die Dichtungseinrichtung 62 auch hier zugleich eine Schutzeinrichtung 65 gegen Hitze von der hier nicht näher gezeigten Kupplungseinrichtung 55 (siehe Figur 2) ausbildet. Hierdurch kann auch eine zusätzliche Hitzeschutzeinrichtung 65, wie sie zuvor beschrieben wurde, verzichtet werden, wobei die Sekundärmasse 30 dieses Ausführungsbeispiels eine nicht separat bezifferte Kante aufweist, die als Schleuderkante dienen kann, um etwaiges Fett von radial innen liegenden Bereichen der Sekundärmasse 30 in die Fettkammern 25, 26 und 27 zu fördern. Radial innen werden die Federkammern 25, 26 und 27 wieder von der polygonalen Innenbegrenzungseinrichtung 42 begrenzt. Die polygonalen Innenbegrenzungseinrichtung 42 ist wie gehabt an der Sekundärmasse 30 befestigt.

Auch ist radial innen liegend ein Gleitlager (nicht beziffert) vorgesehen, welches eine Lagereinrichtung 51 für eine Getriebeeingangswelle 52 bilden kann, wobei unmittelbar ersichtlich ist, dass auch diese Lagereinrichtung 51 radial innerhalb des Lagersitzes 50 und axial primärseitig des Lagersitzes 50 angeordnet ist.

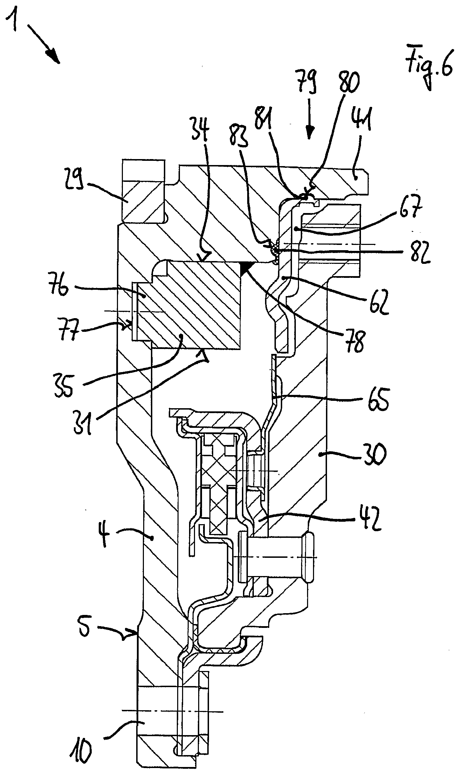

Anhand des Ausführungsbeispiels gemäß der Figur 6, welches im Wesentlichen den vorstehend beschriebenen Ausführungsbeispielen entspricht, ist dargestellt, wie ein Anlagenocken 35 einer Anlageeinrichtung 31, 32 bzw. 33 an einer Primärmasse 4 des Torsionsschwingungsdämpfers 1 vorteilhaft festgelegt sein kann. Bei dem in der Figur 6 gezeigten Ausführungsbeispiel greift der Anlagenocken 35 einerseits mit einem Verbindungszapfen 76 in eine korrespondierende Vertiefung 77 der Primärmasse 4 ein und ist somit radial und in Umfangsrichtung formschlüssig an der Primärmasse 4 gelagert. Andererseits stützt sich der Anlagenocken 35 radial auch an der drehbearbeiteten Befestigungsfläche 34 der Primärmasse 4 ab. An dieser ist der Anlagenocken 35 noch mit einer Schweißverbindung 78, die etwa in Gestalt eines Schweißpunkts ausgebildet sein kann, stoffschlüssig an der Primärmasse 4 angeschweißt, wodurch der Anlagenocken 35 auch axial an der Primärmasse 4 gesichert ist.

Des Weiteren ist innerhalb eines umlaufenden Kragens 41 der Primärmasse 4 ebenfalls eine Dichtungseinrichtung 62 für einen Spalt 67 vorgesehen, wobei die Dichtungseinrichtung 62 bei diesem Ausführungsbeispiel nicht stoffschlüssig an der Primärmasse 4 befestigt ist sondern im Wesentlichen formschlüssig. Eine entsprechend innenliegende Formschlussverbindung 79 ist primärmassenseitig baulich einfach mittels einer umlaufenden Innennut 80 und dichtungseinrichtungsseitig mittels einer radial nach außen gerichteten Erhöhung 81 realisiert. Bei diesem Ausführungsbeispiel ist die Erhöhung 81 erst nach dem Einlegen der Dichtungseinrichtung 62 in die Primärmasse 4 bereitgestellt, indem nach dem Einlegen von radial innen ausgehend mittels einer Rolle ein biegend wirksamer Druck auf die Dichtungseinrichtung 62 nach radial außen ausgeübt wird, so dass Material der Dichtungseinrichtung 62 in die Innennut 80 gepresst und auf diese Weise die Erhöhung 81 gebildet wird. Eine zusätzliche Abdichtung zwischen der innenseitig eingerollten Dichtungseinrichtung 62 und der Primärmasse 4 wird mittels eines gut quetschbaren Dichtungsrings 82 erzielt, welcher von der Dichtungseinrichtung 62 auch in eine hierfür vorgesehene Ringnut 83 der Primärmasse 4 hinein gedrückt ist.

Um vorliegend Wiederholungen hinsichtlich der weiteren Gestaltung und Funktion des Torsionsschwingungsdämpfers 1 zu vermeiden, wird der weitere Aufbau des Torsionsschwingungsdämpfers 1 gemäß der Figur 6 nicht weiter beschrieben, da dieser im Übrigen den anderen Ausführungsbeispielen entspricht. Insbesondere um ein Rotieren der Dichtungseinrichtung 62 zu verhindern, können zusätzlich in einer alternativen Ausführungsform zu der in Figur 6 dargestellten Ausführungsform Schweißpunkte vorgesehen sein. Andererseits kann durch andere Maßnahmen, wie durch Einkerbungen oder Lotstellen, ein Rotieren verhindert werden.

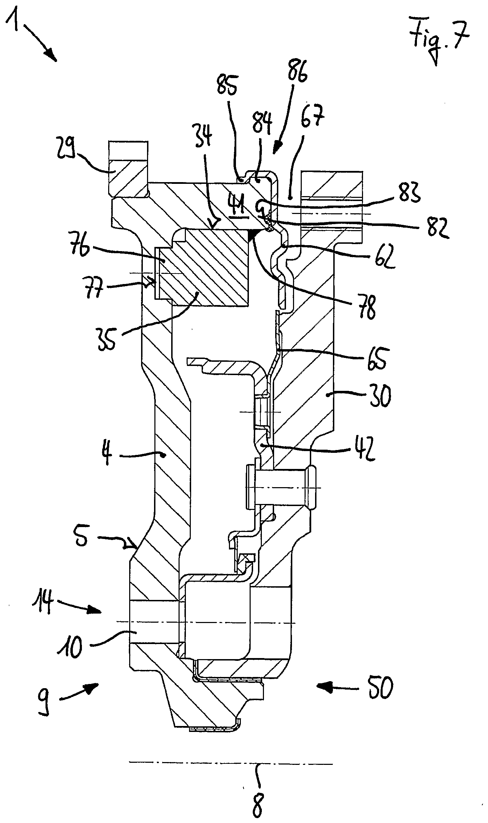

Bei einem weiteren Ausführungsbeispiel eines gattungsgemäßen Torsionsschwingungsdämpfers 1, welches der Figur 7 dargestellt ist, greift ein Anlagenocken 35 ebenfalls mittels eines Verbindungszapfens 76 in eine korrespondierende Vertiefung 77 der Primärmasse 4 ein und ist somit bereits gut an der Primärmasse 4 festgelegt. Zusätzlich stützt sich der Anlagenocken 35 radial an einer drehbearbeiteten Befestigungsfläche 34 der Primärmasse 4 ab, an welcher er axial wieder mit einer Schweißverbindung 78 gesichert ist.

Eine hinsichtlich der Primärmasse 4 vorgesehene Dichtungseinrichtung 62 zum Abdichten eines Spalts 67 zwischen der Primärmasse 4 und einer Sekundärmasse 30 ist alternativ über eine Randerhöhung 84 eines umlaufenden Kragens 41 der Primärmasse 4 geklipst und somit radial von Außen auf die Primärmasse 4 aufgespannt. Hierzu ist die Dichtungseinrichtung 62 an ihrem radial äußeren Ende mit einer entsprechenden Hinterschneidung 85 ausgestattet. Insofern besteht zwischen der Dichtungseinrichtung 62 und der Primärmasse 4 eine außenliegende Formschlussverbindung 86. Eine besonders gute Abdichtung zwischen der außenseitig aufgeklipsten Dichtungseinrichtung 62 und der Primärmasse 4 wird auch hier zusätzlich mittels eines gut quetschbaren Dichtungsrings 82 erzielt, welcher von der Dichtungseinrichtung 62 in eine hierfür vorgesehene Ringnut 83 der Primärmasse 4 hinein gedrückt ist.

Auf eine weitere ausführliche Beschreibung des Ausführungsbeispiels gemäß der Figur 7 wird wieder verzichtet, um Wiederholungen zu vermeiden, da auch dieses im Übrigen den vorstehend beschriebenen Ausführungsbeispielen entspricht.

Wie den Figuren 6 und 7 entnehmbar, kann auf der Seite der Anlagenocken 35, welche der Primärmasse 4 zugewandt ist, eine hier nicht bezifferte Ausnehmung vorgesehen sein, welche eine gute Anlage der Anlagenocken 35 an der Primärmasse 4 ermöglicht, indem durch diese Ausnehmung für die Primärmasse 4 ein Freiraum ermöglicht werden kann, in welchem der Übergang von der drehbearbeitete Befestigungsfläche 34 bzw. der sich axial erstreckenden Innenfläche zu der sich radial erstreckenden Seitenfläche der Primärmasse 4 vorgesehen sein kann. Auf diese Weise braucht dieser Übergang nicht zwingen sehr genau ausgearbeitet zu werden und die Anlagenocken 35 können dennoch passgenau eingesetzt werden.

Es versteht sich, dass Komponenten des vorliegenden Torsionsschwingungsdämpfers 1, insbesondere die Primärmasse 4 und die Sekundärmasse 30, noch anders als gezeigt ausgebildet sein können.

**Bezugsziffernliste:**

| | | | |
|---|---|---|---|
| 1 | Torsionsschwingungsdämpfer | 30 | Sekundärmasse |
| 2 | Primärseite | 31 | erste Anlageeinrichtung |
| 3 | Sekundärseite | 32 | zweite Anlageeinrichtung |
| 4 | Primärmasse | 33 | dritte Anlageeinrichtung |
| 5 | Graugussmaterialkörper | 34 | drehbearbeitete Befestigungsfläche |
| 6 | Antriebswelle | 35 | Anlagenocken |
| 7 | Motorgehäuse | 36 | Anlagefläche |
| 8 | Rotationsachse | 37 | radiale Anlagefläche |
| 9 | Antriebswellenaufnahme | 38 | Federschuhe |
| 10 | Befestigungsschraubenlöcher | 39 | Einzelfedern |
| 11 | Positionierlöcher | 40 | Umfangsrichtung |
| 12 | Befestigungsschrauben | 41 | umlaufender Kragen |
| 13 | Befestigungsschraubengewinde | 42 | polygonale Innenbegrenzungseinrichtung |
| 14 | Aufnahmebohrungen | | |
| 15 | Befestigungsmittel | 43 | Bauraum |
| 16 | Feder-Dämpfer-Einrichtung | 44 | Reibeinrichtungen |
| 17 | Schmiermittelsumpf | 45 | Funktionsbleche |
| 18 | erster Schmiermittelaufnahmebereich | 46 | Aufnahmeraum |
| 19 | zweiter Schmiermittelaufnahmebereich | 47 | erste Erhebung |
| | | 48 | zweite Erhebung |
| 20 | dritter Schmiermittelaufnahmebereich | 49 | dritte Erhebung |
| | | 50 | Lagersitz |
| 21 | Gusswandung der Primärmasse | 51 | Lagereinrichtung |
| 22 | erste Fettkammer | 52 | Getriebeeingangswelle |
| 23 | zweite Fettkammer | 53 | Getriebegehäuse |
| 24 | dritte Fettkammer | 54 | Verschraubung |
| 25 | erste Federkammer | 55 | Kupplungseinrichtung |
| 26 | zweite Federkammer | 56 | Kupplungsbetätigung |
| 27 | dritte Federkammer | 57 | Kupplungsscheibe |
| 28 | Primärmassengraugussscheibe | 58 | Kupplungsscheibenhalterung |
| 29 | Anlasserzahnkranz | 59 | Splineverbindung |
| 60 | Wellenzapfenende | | |
| 61 | innerer Lagerbereich | | |
| 62 | Dichtungseinrichtung | | |
| 63 | zusätzliche Wandung | | |
| 64 | Schweißnaht | | |
| 65 | Hitzeschutzeinrichtung | | |
| 66 | Bereich | | |
| 67 | Spalt | | |
| 68 | freies Ende der Hitzeschutzeinrichtung | | |
| 69 | freies Ende der Dichtungseinrichtung | | |
| 70 | Schleudereinrichtung | | |
| 71 | Schleuderkante | | |
| 72 | Schmiermittelauffangschräge | | |
| 73 | Trägerblech | | |
| 74 | Lötnaht | | |
| 75 | Dichtungsmasse | | |
| 76 | Verbindungszapfen | | |
| 77 | korrespondierende Vertiefung | | |
| 78 | Schweißverbindung | | |
| 79 | innenliegende Formschlussverbindung | | |
| 80 | umlaufende Innennut | | |
| 81 | Erhöhung | | |
| 82 | Dichtungsring | | |
| 83 | Ringnut | | |
| 84 | Randerhöhung | | |
| 85 | Hinterschneidung | | |
| 86 | außenliegende Formschlussverbindung | | |

## Patentansprüche

1. Torsionsschwingungsdämpfer (1) mit einer Primärseite (2), mit einer Sekundärseite (3) und mit einer mit Schmiermittel benetzten Feder-Dämpfer-Einrichtung (16), bei welchem die Primärseite (2) eine Primärmasse (4) mit einer Antriebswellenaufnahme (9) und die Sekundärseite (3) eine Sekundärmasse (30) umfasst und bei welchem die Feder-Dämpfer-Einrichtung (16) zwischen der Primärmasse (4) und der Sekundärmasse (30) Torsionsschwingungen dämpft, ***dadurch gekennzeichnet, dass*** die Primärmasse (4) mit der Antriebswellenaufnahme (9) urgeformt hergestellt ist und dass an der Primärmasse (4) eine Dichtungseinrichtung (62) angeordnet ist, welche radial nach innen zwischen der Primärmasse (4) und der Sekundärmasse (30) hinein ragt und an der Primärmasse (4) stoffschlüssig angeordnet ist.

2. Torsionsschwingungsdämpfer (1) nach Anspruch 1, ***dadurch gekennzeichnet, dass*** die Dichtungseinrichtung (62) an der Primärmasse (4) angeschweißt ist.

3. Torsionsschwingungsdämpfer (1) nach Anspruch 1, ***dadurch gekennzeichnet, dass*** die Dichtungseinrichtung (62) an der Primärmasse (4) angelötet ist.

4. Torsionsschwingungsdämpfer (1) nach einem der Ansprüche 1 bis 3, ***dadurch gekennzeichnet, dass*** für die stoffschlüssige Verbindung ein Eisen, Kupfer, Nickel und/oder Silber als Zusatzwerkstoff beigegeben werden.

5. Torsionsschwingungsdämpfer (1) nach einem der Ansprüche 1 bis 3, ***dadurch gekennzeichnet, dass*** die Primärmasse (4) aus Grauguss gebildet ist.

6. Torsionsschwingungsdämpfer (1) nach einem der Ansprüche 1 bis 5, ***dadurch gekennzeichnet, dass*** die Dichtungseinrichtung (62) partiell an der Primärmasse (4) befestigt ist, wobei die Dichtungseinrichtung (62) und die Primärmasse (4) mittels einer zusätzlichen Dichtung (75) zueinander abgedichtet sind.

7. Torsionsschwingungsdämpfer (1) nach einem der Ansprüche 1 bis 6, ***dadurch gekennzeichnet, dass*** die Dichtungseinrichtung (62) an der Primärmasse (4) formschlüssig angeordnet ist.

8. Torsionsschwingungsdämpfer (1) nach Anspruch 7, ***dadurch gekennzeichnet, dass*** die Dichtungseinrichtung (62) an die Primärmasse (4) angeclipst ist.

9. Torsionsschwingungsdämpfer (1) nach Anspruch 8, ***dadurch gekennzeichnet, dass*** die Dichtungseinrichtung (62) an der Primärmasse (4) über einen angebogenen Bereich, insbesondere über einen um- und/oder angerollten Bereich (Erhöhung 81, Hinterschneidung 85), befestigt ist.

10. Torsionsschwingungsdämpfer (1) nach einem der Ansprüche 7 bis 9, ***dadurch gekennzeichnet, dass*** die Dichtungseinrichtung (62) und die Primärmasse (4) mittels einer zusätzlichen Dichtung (75) zueinander abgedichtet sind.

11. Torsionsschwingungsdämpfer (1) nach einem der Ansprüche 1 bis 10, ***dadurch gekennzeichnet, dass*** die Dichtungseinrichtung (62) zumindest teilweise eine Wandung (63) einer Federkammer (25, 26, 27) für eine Feder-Dämpfer-Einrichtung (16) bildet.

12. Torsionsschwingungsdämpfer (1) nach einem der Ansprüche 1 bis 11, ***gekennzeichnet durch*** einen Schmiermittelaufnahmebereich (18, 19, 20), bei welchem eine Begrenzung des Schmiermittelaufnahmebereiches (18, 19, 20) zumindest teilweise von der Dichtungseinrichtung (62) gebildet ist.

13. Torsionsschwingungsdämpfer (1) nach einem der Ansprüche 1 bis 12, ***dadurch gekennzeichnet, dass*** eine Hitzeschutzeinrichtung (65) mit ihrem freien Ende (69) axial näher an der Primärmasse (4) angeordnet ist als ein freies Ende (68) der radial weiter außen angeordneten Dichtungseinrichtung (62) der Primärmasse (4).

14. Torsionsschwingungsdämpfer (1) nach Anspruch 13 ***dadurch gekennzeichnet, dass*** die Hitzeschutzeinrichtung (65) eine Schleudereinrichtung (70) für Schmiermittel aufweist.

15. Torsionsschwingungsdämpfer (1) nach Anspruch 14, ***dadurch gekennzeichnet, dass*** die Schleudereinrichtung (70) eine Schleuderkante (71) umfasst, welche von einem freien Ende (69) der Hitzeschutzeinrichtung (65) gebildet ist.

## Claims

1. Torsion vibration damper (1) having a primary side (2), a secondary side (3) and a spring-damper device (16) moistened with lubricating agent, in which the primary side (2) comprises a primary mass (4) with a drive shaft holder (9) and the secondary side (3) comprises a secondary mass (30) and in which the spring-damper device (16) damps torsion vibrations between the primary mass (4) and the secondary mass (30), **characterised in that** the primary mass (4) is originally formed together with the drive mass holder (9) and that a sealing device (62) is arranged on the primary mass (4) which protrudes radially inwards between the primary mass (4) and the secondary mass (30) and is arranged on the primary mass (4) in a bonded manner.

2. Torsion vibration damper (1) according to claim 1 **characterised in that** the sealing device (62) is welded onto the primary mass (4).

3. Torsion vibration damper (1) according to any one of claims 1 **characterised in that** sealing device (62) is soldered to the primary mass (4).

4. Torsion vibration damper (1) according to any one of claims 1 to 3 **characterised in that** for the bonded connection iron, copper, nickel and/or silver is/are added as additional materials.

5. Torsion vibration damper (1) according to any one of claims 1 to 3 **characterised in that** the primary mass (4) is made of grey cast iron.

6. Torsion vibration damper (1) according to any one of claims 1 to 5 **characterised in that** the sealing device (62) is partially fastened to the primary mass (4), wherein the sealing device (62) and the primary mass (4) are sealed relative to each other by means of an additional seal (75).

7. Torsion vibration damper (1) according to any one of claims 1 to 5 **characterised in that** the sealing device (62) is arranged on the primary mass (4) in a form-fitting manner.

8. Torsion vibration damper (1) according to claim 7 **characterised in that** the sealing device (62) is clipped onto the primary mass (4).

9. Torsion vibration damper (1) according to claim 8 **characterised in that** the sealing device (62) is fastened to the primary mass (4) by way of a bent area, in particular by way of a rolled/rolled up area (elevation 81, undercut 85).

10. Torsion vibration damper (1) according to any one of claims 7 to 9 **characterised in that** the sealing device (62) and the primary mass (4) are sealed relative to each other by means of an addition seal (75).

11. Torsion vibration damper (1) according to any one of claims 1 to 10, **characterised in that** the sealing device (62) at least partly forms a wall (63) of a spring chamber (25, 26, 27) for a spring-damper device (16).

12. Torsion vibration damper (1) according to any one of claims 1 to 11 **characterised by** a lubricating agent take-up area (18, 19, 20), in which a limitation of the lubricating agent take-up area (18, 19, 20) is at least partly formed by the sealing device (62).

13. Torsion vibration damper (1) according to any one of claims 1 to 12 **characterised in that** a heat protection device (65) is arranged with its free end (69) axially closer to the primary mass (4) than a free end (68) of the sealing device (62) of the primary mass (4) arranged further outwards radially.

14. Torsion vibration damper (1) according to claim 13 **characterised in that** the heat protection device (65) comprises a spinning device (70) for lubricating agent.

15. Torsion vibration damper (1) according to claim 14 **characterised in that** the spinning device (70) comprises a spinning edge (71) which is formed by a free end (69) of the heat protection device (65).

## Revendications

1. Amortisseur de vibrations de torsion (1) comportant un côté primaire (2), un côté secondaire (3) et un dispositif amortisseur à ressort (16) irrigué de lubrifiant, dans lequel le côté primaire (2) comprend une masse primaire (4) dotée d'un support d'arbre d'entraînement (9) et le côté secondaire (3) une masse secondaire et dans lequel le dispositif amortisseur à ressort (16) amortit des vibrations de torsion entre la masse primaire (4) et la masse secondaire (30), **caractérisé en ce que** la masse primaire (4) est fabriquée en la moulant à l'origine avec le support d'arbre d'entraînement (9) et que, au niveau de la masse primaire (4), est disposé un dispositif d'étanchéité (62) qui dépasse radialement vers l'intérieur entre la masse primaire (4) et la masse secondaire (30) et est disposé au niveau de la masse primaire (4) en correspondance de matière.

2. Amortisseur de vibrations de torsion (1) selon la revendication 1, **caractérisé en ce que** le dispositif d'étanchéité (62) est soudé à la masse primaire (4).

3. Amortisseur de vibrations de torsion (1) selon la revendication 1, **caractérisé en ce que** le dispositif d'étanchéité (62) est brasé à la masse primaire (4).

4. Amortisseur de vibrations de torsion (1) selon une des revendications 1 à 3, **caractérisé en ce que**, pour la liaison par correspondance de matière, un fer, cuivre, nickel et/ou argent est ajouté comme matériau complémentaire.

5. Amortisseur de vibrations de torsion (1) selon une des revendications 1 à 3, **caractérisé en ce que** la masse primaire (4) est constituée de fonte grise.

6. Amortisseur de vibrations de torsion (1) selon une des revendications 1 à 5, **caractérisé en ce que** le dispositif d'étanchéité (62) est fixé partiellement à la masse primaire (4), le dispositif d'étanchéité (62) et la masse primaire (4) étant isolés l'un de l'autre au moyen d'un joint supplémentaire (75).

7. Amortisseur de vibrations de torsion (1) selon une des revendications 1 à 6, **caractérisé en ce que** le dispositif d'étanchéité (62) est disposé en correspondance géométrique au niveau de la masse primaire (4).

8. Amortisseur de vibrations de torsion (1) selon la revendication 7, **caractérisé en ce que** le dispositif d'étanchéité (62) est clipsé à la masse primaire (4).

9. Amortisseur de vibrations de torsion (1) selon la revendication 8, **caractérisé en ce que** le dispositif d'étanchéité (62) est fixé à la masse primaire (4) par une partie recourbée, en particulier par une partie roulée et/ou enroulée (proéminence 80, contre-dépouille 85).

10. Amortisseur de vibrations de torsion (1) selon une des revendications 7 à 9, **caractérisé en ce que** le dispositif d'étanchéité (62) et la masse primaire (4) sont isolés l'un de l'autre au moyen d'un joint supplémentaire (75).

11. Amortisseur de vibrations de torsion (1) selon une des revendications 1 à 10, **caractérisé en ce que** le dispositif d'étanchéité (62) constitue au moins partiellement une paroi (63) d'une chambre à ressort (25,26,27) pour un dispositif amortisseur à ressort (16).

12. Amortisseur de vibrations de torsion (1) selon une des revendications 1 à 11, **caractérisé par** une zone de réception de lubrifiant (18,19,20) dans laquelle une limitation de la zone de réception de lubrifiant (18,19,20) est constituée du moins partiellement par le dispositif d'étanchéité (62).

13. Amortisseur de vibrations de torsion (1) selon une des revendications 1 à 12, **caractérisé en ce qu'**un dispositif de protection contre la chaleur (65) est disposé par son extrémité libre (69) axialement plus près de la masse primaire (4) qu'une extrémité libre (68) du dispositif d'étanchéité (62) disposé plus loin vers l'extérieur de la masse primaire (4).

14. Amortisseur de vibrations de torsion (1) selon la revendication 13, **caractérisé en ce que** le dispositif de protection contre la chaleur (65) présente un dispositif de projection (70) pour du lubrifiant.

15. Amortisseur de vibrations de torsion (1) selon la revendication 14, **caractérisé en ce que** le dispositif de projection (70) présente une arête de projection (71) qui est constituée par une extrémité libre (69) du dispositif de protection contre la chaleur (65).
